# DEMANDE DE BREVET EUROPEEN

(11) **EP 2 063 608 A1**
(43) Date de publication de la demande: **27.05.2009**
(21) Numéro de dépôt: 07301583.6
(22) Date de dépôt: 26.11.2007
(51) Int. Cl.: H04L 29/08, H04L 12/28

(54) **Procédé pour délivrer un descripteur de services d'un objet, procédé d'installation des services dudit objet et objet associé**

(71) Demandeur: GEMPLUS, 13420 Gémenos (FR)
(72) Inventeur: Dechamps, Eric, 13008, Marseille (FR)

(57) **Abrégé**

Pour produire et délivrer un descripteur de services d'un objet dont la configuration fonctionnelle est définie sous la forme d'un ou plusieurs dispositifs, chaque dispositif présentant un ou plusieurs services, il est prévu un procédé d'installation d'un tel objet, un procédé pour délivrer un descripteur de services, et un objet apte à mettre en oeuvre ledit procédé pour que le descripteur tienne compte de la configuration fonctionnelle courante de l'objet, celle-ci pouvant évoluer dans le temps par ajout, modification, suppression, activation ou désactivation d'un ou plusieurs des dispositifs et/ou services.

## Description

L'invention concerne notamment un procédé pour délivrer un descripteur de services d'un objet permettant et facilitant l'intégration dynamique de l'objet au sein d'un réseau local mis en oeuvre au domicile ou en entreprise, au moyen de supports du type courants porteurs en ligne, Ethernet, Wifi, Bluetooth... Plus particulièrement, l'invention s'applique à l'architecture UPnP^{™} *(Universal Plug and Play)* permettant une découverte automatique pour plusieurs catégories d'objets ou périphériques d'un réseau.
Ainsi chaque objet peut rejoindre dynamiquement un réseau, obtenir une adresse IP *(Internet Protocol),* annoncer son nom, préciser ses fonctions groupées en services, sur simple demande. Lesdits objets peuvent également interroger les autres objets ayant rejoint le réseau local et ainsi connaître leurs capacités et fonctions. Les objets peuvent en outre se déconnecter du réseau automatiquement sans laisser d'informations. Le protocole de découverte UPnP^{™} est basé sur le protocole SSDP *(Simple Service Discovery Protocol*) qui se charge de découvrir automatiquement les nouveaux périphériques sur un réseau.
Ainsi lorsqu'un objet se connecte au réseau, le protocole de découverte permet de prévenir des points de contrôle afin de leur proposer les services de l'objet connecté. Un point de contrôle est un objet consommateur de services par opposition à un périphérique qui est un objet fournisseur de services. Un objet peut être parfois tour à tour point de contrôle et périphérique. A titre d'exemple un ordinateur portable est généralement considéré comme point de contrôle alors qu'une imprimante est un périphérique. Toutefois ledit ordinateur portable peut se déclarer comme serveur de photographies ou de musique et se muer en périphérique pour le compte d'un ordinateur principal d'un domicile, agissant ainsi en tant que point de contrôle.
Lorsqu'un point de contrôle se connecte au réseau, le protocole de découverte lui permet de rechercher les objets intéressants pour lui. Nous appellerons cette étape, *l'étape de découverte.* Les objets recherchés sont des objets de type périphérique ou encore des fournisseurs de services. Un périphérique est vu comme un ensemble d'un ou plusieurs dispositifs, chacun fournissant un ou plusieurs services eux-mêmes regroupant des fonctions. Pour réaliser la recherche d'un dispositif, le protocole permet des échanges d'informations essentielles et spécifiques à chaque dispositif de périphériques, telles un nom, un type ou encore un identifiant ou des références vers des informations plus détaillées.
Lorsqu'un point de contrôle a découvert un dispositif intéressant, il doit connaître d'autres informations, notamment l'ensemble des services et donc des fonctions pouvant être réalisées par le dispositif. Ainsi, pour interagir avec ce dispositif, le point de contrôle doit récupérer un descripteur décrivant précisément les services offerts par le dispositif d'un périphérique. Pour cela, le point de contrôle utilise une adresse ou URL *(Uniform Resource Locator)* fourni par le dispositif dans un message de découverte. Ce *descripteur de service* est généralement exprimé en XML (*eXtensible Markup Language).* Un tel descripteur comporte des données informatives (nom, modèle, version, constructeur, ...) ainsi qu'une liste des services offerts. Cette étape est dite *étape* de *description.*
L'étape suivante, dite étape de *contrôle,* correspond à l'envoi d'un message de contrôle par le point de contrôle au dispositif identifié. Pour cela le point de contrôle dispose d'une adresse de type URL transmise dans le descripteur de services du dispositif. A réception d'un message de contrôle, un dispositif retourne un descripteur détaillé par service qui liste les fonctions supportées par le service. Ce descripteur de services inclut une liste de fonctions (c'est à dire d'actions auxquelles le service répond) et une liste de variables qui caractérisent l'exécution du service. Quand ces variables évoluent, le service publie des mises à jour sous la forme de messages XML. Ceci correspond à l'étape de *notification d'évènements.* Les points de contrôle peuvent s'abonner pour les recevoir. L'appel à une fonction est transmis au moyen de SOAP, protocole orienté objet, bâti sur le langage XML et permettant la transmission de messages entre objets distants, le plus souvent à l'aide du protocole HTTP *(HyperText Transfert Protocol).*
Pour finir, si un dispositif dispose d'une URL de présentation, un point de contrôle peut se connecter à une page depuis cette URL, charger la page et la diffuser au moyen par exemple d'un navigateur selon les capacités du point de contrôle. Cette dernière étape est l'étape de *présentation.*

Le descripteur de services échangé durant l'étape de découverte est essentiel à la mise en oeuvre du réseau local. Dans les solutions connues, un descripteur global groupant les descripteurs des services des dispositifs d'un objet de type périphérique est prédéfini lors de la construction dudit objet.
Avec l'avènement de nouvelles technologies, il devient possible de modifier la configuration fonctionnelle d'un objet en lui associant un ou plusieurs nouveaux dispositifs ou en supprimant voire en enrichissant les services d'un dispositif existant. Par ailleurs, il est envisageable d'activer et/ou désactiver des dispositifs d'un objet en fonction de droits. Bien que la technologie permette de modifier la configuration matérielle, logicielle et fonctionnelle d'un objet déjà émis et éventuellement déjà en réseau, elle nécessite toutefois un retour terrain ou l'utilisation d'un schéma de mise à jour de type post-émission complexe pour modifier, après une première mise en service, la teneur du descripteur des services d'un objet particulier. Il n'existe pas de moyen et/ou procédé pour traduire cette évolution dynamiquement.

L'invention a pour but de remédier aux inconvénients des solutions actuelles en permettant la génération d'un descripteur de services à la demande, descripteur destiné à être mémorisé dans l'objet avant sa diffusion voire à être diffusé à la volée durant les étapes de découverte et/ou de description.

A cette fin, il est prévu procédé pour délivrer un descripteur de services accessibles via un objet électronique communicant au sein d'un réseau,
- ledit objet présentant au moins un dispositif offrant au moins un service,
- ledit descripteur permettant l'accès au réseau et la présentation de l'objet au moyen d'un protocole de découverte automatique et comportant pour un dispositif :

- un préambule de dispositif comprenant des données informatives de dispositif,
- un postambule de dispositif, pour un service :

- un préambule de service comprenant des données informatives de service,
- un postambule de service, le procédé selon l'invention étant caractérisé en ce qu'il comporte :

- une étape de rechercher dans une mémoire de l'objet, une mémoire associée à un dispositif ;
- une étape de délivrer un préambule du dispositif comprenant des données informatives, à partir d'une lecture de données enregistrées dans la mémoire associée au dispositif ;
- une étape de rechercher dans une mémoire associée au dispositif, une mémoire associée à un service offert par ledit dispositif ;
- une étape de délivrer un préambule du service comprenant des données informatives relatives au service, à partir d'une lecture de données enregistrées dans la mémoire associée au service;
- une étape de délivrer un postambule du service ;
- une étape de délivrer un postambule du dispositif.

Le cas échéant, le procédé selon l'invention peut comporter autant de séquences d'étapes consistant à :
- rechercher dans la mémoire associée au dispositif une mémoire associée à un service offert par ledit dispositif ;
- délivrer un préambule du service comprenant des données informatives relatives au service à partir d'une lecture de données enregistrées dans la mémoire associée au service;
- et délivrer un postambule du service ; qu'il existe de services accessibles au moyen du dispositif et en ce que lesdites séquences d'étapes sont réalisées avant l'étape de délivrer le postambule dudit dispositif.

En outre, selon un mode de réalisation, le procédé peut comporter autant d'itérations qu'il existe de dispositifs accessibles via l'objet.

En variante, le procédé selon l'invention peut comporter en outre :
- une première étape de délivrer un préambule de l'objet comprenant des données informatives relatives à l'objet à partir d'une lecture de données enregistrées dans la mémoire de l'objet ;
- une dernière étape de délivrer un postambule de l'objet.

Le procédé selon l'invention peut préférentiellement être mis en oeuvre par l'objet lors de la connexion de celui-ci au réseau.

Le cas échéant, si l'objet présente une pluralité de dispositifs, le procédé selon l'invention peut délivrer un descripteur comprenant les données de l'ensemble des dispositifs accessibles par l'objet.

Selon une variante, le procédé selon l'invention peut prévoir que l'étape de rechercher un service accessible associé à un dispositif comporte un test d'accessibilité conditionnant la délivrance des informations concernant ledit service. En liaison avec cette variante, ledit test d'accessibilité peut être basé sur une des données enregistrées dans la mémoire associée au service.

De même, il peut être prévu que l'étape de rechercher un dispositif accessible associé à un objet comporte un test d'accessibilité conditionnant la délivrance des informations concernant ledit dispositif. Dans ce cas, ledit test d'accessibilité peut être basé sur une des données enregistrées dans la mémoire associée au dispositif.

L'invention prévoit en outre un objet électronique communicant au sein d'un réseau, ledit objet présentant un dispositif offrant un service sous la forme d'au moins une fonction, l'accès au réseau par l'objet se faisant au moyen d'un protocole de découverte automatique exploitant un descripteur délivré par l'objet, caractérisé en ce que l'objet comporte, pour mettre en oeuvre le procédé selon l'invention :
- une mémoire pour mémoriser des données d'information propres au dispositif, des données d'information propres au service du dispositif, et une référence vers un programme mis en oeuvre par l'objet pour réaliser ladite au moins une fonction associée audit service du dispositif ;
- des moyens pour successivement :

- rechercher dans une mémoire de l'objet, une mémoire associée à un dispositif ;
- délivrer un préambule du dispositif comprenant les données informatives relatives au dispositif recherché, à partir d'une lecture des données d'information enregistrées dans la mémoire de l'objet ;
- rechercher les données relatives à un service du dispositif dans la mémoire de l'objet ;
- des moyens pour délivrer un préambule du service comprenant des données informatives relatives au service à partir d'une lecture des données d'information enregistrées dans la mémoire de l'objet;
- des moyens pour délivrer un postambule du service ;
- des moyens pour délivrer un postambule du dispositif.

En variante, l'invention prévoit que l'objet électronique puisse comporter en outre :
- des données enregistrées dans la mémoire de l'objet ;
- des moyens pour délivrer un préambule de l'objet comprenant des données informatives relatives à l'objet à partir d'une lecture desdites données d'information enregistrées dans la mémoire de l'objet ;
- des moyens pour délivrer un postambule de l'objet.

L'invention prévoit par ailleurs un procédé pour installer un service d'un dispositif dans un objet électronique selon l'invention comportant :
- une étape d'associer au dispositif des données d'information ;
- une étape d'associer à un service offert par le dispositif des données d'information ;
- une étape d'allouer une mémoire dédiée au dispositif ;
- une étape d'enregistrer dans celle-ci lesdites données d'information associées au dispositif ;
- une étape d'allouer au sein de la mémoire associée au dispositif, une mémoire dédiée au service ;
- une étape d'enregistrer, dans la mémoire dédiée au service, les données d'information ;
- une étape d'allouer, dans la mémoire de l'objet, une mémoire pour contenir un programme associé à une fonction offerte par le service ;
- une étape d'enregistrer, dans la mémoire dédiée au service, une référence vers le programme associé à une fonction dudit service.

D'autres caractéristiques et avantages apparaîtront plus clairement à la lecture de la description qui suit et à l'examen des figures qui l'accompagnent parmi lesquelles :
- la figure 1 présente l'architecture fonctionnelle d'un réseau local intégrant une pluralité d'objets électroniques communicant selon l'invention ;
- la figure 2 décrit les étapes d'un procédé pour générer un descripteur de service d'un dispositif d'un objet communicant selon l'invention ;
- la figure 3a présente une description fonctionnelle d'un objet communicant selon l'invention ;
- la figure 3b présente une vue logique d'un plan mémoire d'un objet communicant selon l'invention.

Bien que l'invention ait été décrite selon des réalisations préférées en référence à l'architecture UPnP^{™} (*Universal Plug and Play*) permettant une découverte automatique pour plusieurs catégories d'objets ou périphériques d'un réseau local mis en oeuvre au domicile ou en entreprise, au moyen de supports du type courants porteurs en ligne, Ethernet, Wifi, Bluetooth, le procédé selon l'invention peut être appliqué à tout objet électronique devant décrire au travers dudit réseau les services qu'il est en mesure d'offrir, quels que soient l'architecture et les protocoles de communication concernés.

L'invention s'applique parfaitement à tout objet, qu'il soit possible ou non d'en modifier la configuration fonctionnelle après son émission. L'invention permet en outre de garder toute compatibilité avec les objets selon l'art antérieur présentant des descripteurs statiques et prédéterminés avant émission dudit objet.

L'invention est très utile pour permettre l'évolution de la configuration fonctionnelle d'un objet. Compte tenu de l'élaboration à la demande du descripteur de l'objet, il est possible d'ajouter un dispositif ou un service d'un dispositif ou une fonction d'un service. Dès l'installation de la nouvelle fonctionnalité, cette dernière sera opérationnelle et mise à disposition immédiatement. De même il est possible de supprimer voire modifier un dispositif, un service ou une fonction.

L'invention apporte également l'avantage de permettre l'émission d'objets présentant des dispositifs ou services dont la mise à disposition peut être soumise à conditions. Nous pouvons donc imaginer de jouer avec l'accessibilité de dispositifs ou de services. Ainsi, un dispositif ou un service peut être caché, c'est à dire non mentionné dans le descripteur généré et délivré selon l'invention si le dispositif ou service n'est pas activé. Une information d'activation peut en effet être ajoutée aux données d'information d'un dispositif ou service comme nous le verrons ultérieurement au travers d'un cas d'utilisation. Nous pouvons donc mettre en oeuvre une politique de gamme de produits en s'appuyant sur un produit générique présentant l'ensemble des dispositifs et services tout en prévoyant de rendre accessible tout ou partie desdits dispositifs ou services en fonction du niveau de gamme et donc du prix.

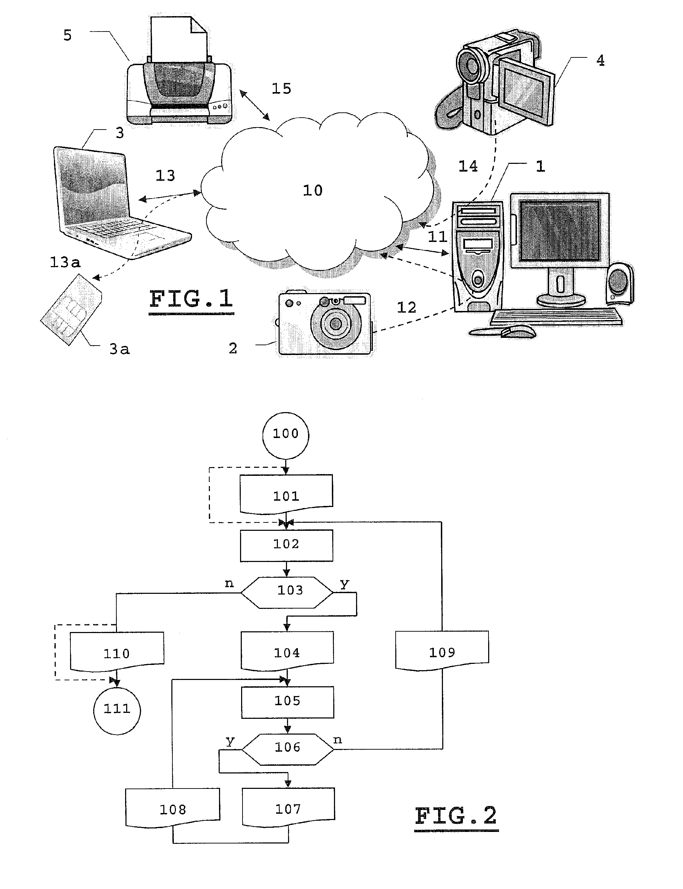

Dans la figure 1, un ordinateur de bureau 1 est mis en liaison au travers du réseau 10 d'un domicile avec une pluralité d'appareils électroniques. L'ordinateur de bureau 1 est relié au réseau, au moyen par exemple d'une liaison filaire 11 de type Ethernet. Il peut entrer en communication avec un ordinateur portable 3 au travers d'une liaison 13 de type Wifi. En utilisant un lecteur de type PCMCIA ou SD intégré audit ordinateur portable, une carte à puce 3a peut également être connectée au réseau local au travers 13a de l'ordinateur portable. Par ailleurs, une connexion Ethernet 15 permet de transmettre à une imprimante multifonctions 5 des documents pour impression. De même au travers de liaisons respectives de type USB *(Universal Serial Bus)* 12 et 14 un appareil photographique numérique et un caméscope peuvent mettre des photographies ou films à disposition de l'ordinateur 1. Ce dernier agit en tant que point de contrôle. L'ordinateur 1, l'imprimante 5, l'appareil photographique 2, le caméscope 4 voire la carte à puce 3a agissent en tant que périphériques, fournisseurs de services. Il est envisageable que l'ordinateur portable 3 puisse se muer en périphérique fournisseur de contenus pour le compte de l'ordinateur de bureau 1 point de contrôle et réciproquement.

Chaque objet présente les fonctionnalités disponibles aux autres objets, au moyen par exemple et de manière non limitative de l'architecture UPnP^{™} (*Universal Plug and Play*) qui permet une découverte automatique pour plusieurs catégories d'objets ou périphériques d'un réseau.

Lors de la mise en connexion, les objets électroniques préviennent les points de contrôle éventuels du réseau pour les informer des services qui leur sont accessibles. Pour cela, les objets délivrent un descripteur de services.

Prenons comme premier exemple le cas d'un objet 5 sous la forme d'une imprimante multifonctions, présentant deux dispositifs, respectivement une imprimante et un scanner. Le dispositif imprimante offre le service imprimer en qualité supérieure et le service imprimer en qualité brouillon. Le dispositif scanner offre le service de numérisation feuille à feuille de documents.

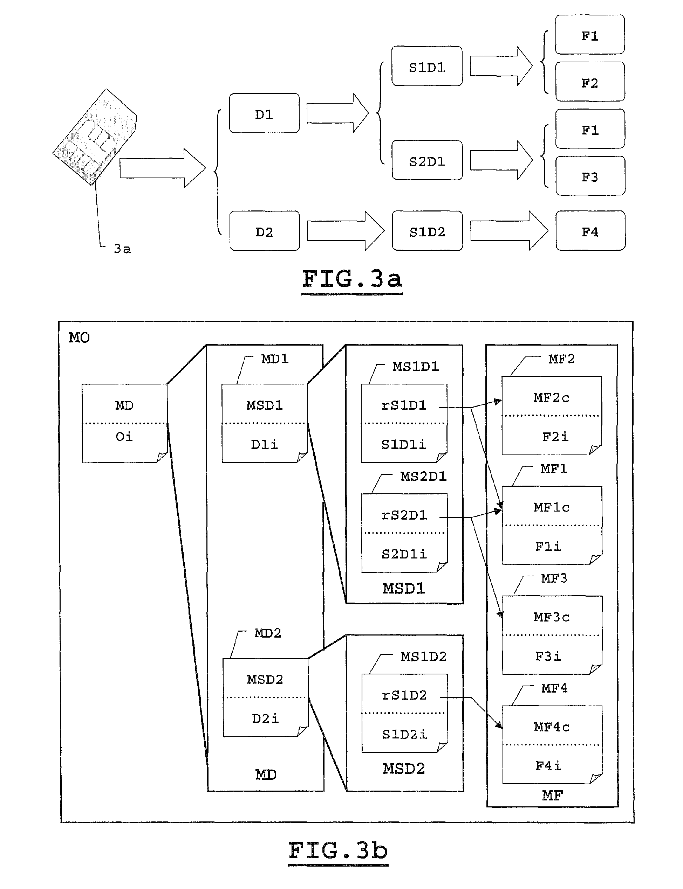

Selon un autre exemple, la représentation fonctionnelle d'une carte à puce 3a est décrite en liaison avec la figure 3a. La carte à puce 3a présente un premier dispositif D1 serveur de contenus multimédia dit « Media Server ». Ce dispositif D1 permet d'offrir deux services, respectivement « Content Directory » S1D1 permettant de choisir un contenu et « Connection Manager » S2D1 réalisant le transfert dudit contenu après négociation de paramètres. Les services S1D1 et S2D1 proposent une première fonction F1 (non détaillée) qui est commune aux deux services. Selon la figure 3b, il est possible de partager le programme associé à la fonction F1 entre lesdits services. Le service S1D1 offre par ailleurs une fonction « Browse » F2 permettant de parcourir l'ensemble des contenus disponibles. Le service S2D1 prévoit outre la fonction F1, une fonction F3 « Get Protocol Info » permettant de découvrir les capacités de l'hôte distant pour préparer le transfert du contenu.

Par ailleurs, il est envisagé de charger ultérieurement un second dispositif D2 dans la carte 3a. Ce second dispositif peut par exemple être téléchargé depuis un serveur d'applications connecté au réseau local 10 via internet (connexion non représentée dans la figure 1). Le dispositif D2 est selon notre exemple un jeu de réflexion dit Reversi. Pour en bénéficier le dispositif offre le service S1D2. Le programme en tant que tel (fonction F4) est également chargé.
L'objet carte à puce 3a peut présenter ainsi deux configurations logicielles selon que le dispositif D2 soit ou non téléchargé.

Selon un autre mode opératoire, il est possible d'émettre les cartes à puce 3a avec les deux dispositifs D1 et D2 et de prévoir une routine d'activation pour simplement activer le dispositif D2. Ainsi il n'est pas nécessaire de télécharger l'intégralité du dispositif de jeu lorsque le propriétaire de la carte souscrit au service. Une simple requête d'activation du dispositif D2 modifiant une donnée d'information associée au dispositif peut être mise en oeuvre. Si le propriétaire de la carte 3a n'a pas souscrit auprès de l'opérateur ayant émis la carte le forfait permettant de bénéficier du jeu selon D2, le dispositif D2 sera certes bien présent dans la carte mais pour autant le procédé selon l'invention ne délivrera pas les éléments relatifs au dispositif D2 dans le descripteur de la carte. Le dispositif D2 restera donc caché « aux yeux » des points de contrôles.

A titre d'exemple et de manière non limitative, prenons l'exemple d'un descripteur de service utilisé en lien avec l'architecture UPnP^{™}.

Un tel descripteur est généralement écrit en langage XML dont la syntaxe peut être globalement décrite en langue anglaise comme ci-après .

- Pour un objet :

```
    <?xml version="1.0"?>
    <root xmlns="urn:schemas-upnp-org:device-1-0">
     <specVersion>
      <major>1</major>
      <minor>0</minor>
     </specVersion>
     <URLBase>base URL for all relative URLs</URLBase>
     <device>
     </device>
       <deviceList>
        Description of embedded devices defined by a UPnP Forum
         working committee (if any) go here
        Description of embedded devices added by UPnP vendor
        (if any) go here
       </deviceList>
       <presentationURL>URL for presentation</presentationURL>
    </root>
```

- Pour un dispositif :

```
     <device>
      <deviceTYpe>urn:schemas-upnp-org:device:deviceType:v</deviceType
      <friendlyName>short user-friendly title</friendlyName>
      <manufacturer>manufacturer name</manufacturer>
      <manufacturerURL>URL to manufacturer site</manufacturerURL
      <modelDescription>long user-friendly title</modelDescription
      <modelName>model name</modelName>
      <modelNtunber>model number</modelNumber>
      <modelURL>URL to model site</modelURL
      <serialNumbe-r>manufactcturer's serial number</serialNumber>
      <UDN>uuid:UUID</UDN>
      <UPC>Universal Product Code</UPC>
      <iconList>
       <icon>
         <mimetype>image/format</mimetype
         <width>horizontal pixels<lwidth>
         <height>vertical pixels</height>
         <depth>color depth</depth>
         <url>URL to icon</url>
        </icon>
       XML to declare other icons, if any, go here
      </iconList>
      <serviceList>
        <service>
        <serviceType>urn:schemas-upnp-org:service: serviceType:v</serviceType
         <serviceId>urn:upnp-org:serviceId:serviceID</serviceId
         <SCPDURL>URL to service description</SCPDURL>
         <controlURL>URL for control</controlURL>
         <eventSubURL>URL for eventing</eventSubURL>
        </service>
        Declarations for other services defined by a UPnP Forum working
        committee (if any) go here
        Declarations for other services added by UPnP vendor
       (if any) go here
      </serviceList>
     </device>
```

- Pour un service :

```
    <?xml version="1.0"?>
    <scpd xmlns="urn:schemas-upnp-org:service-1-0"
     <specVersion>
      <major>1</major>
      <minor>0</minor>
     </specVersion>
     <actionList>
      <action>
        <naroe>actionName</name>
        <argumentList
         <argument>
          <name>formalParameterName</name>
          <direction>in xor out</direction>
          <retval />
           <relatedStateVariable>stateVariableNare</relatedStateVariable>
         </argument>
         Declarations for other arguments defined by UPnP Forum working
         committee (if any) go here
        </argumentList>
      </action>
      Declarations for other actions defined by UPnP Forum working
      committee (if any)go here
      Declarations for other actions added by UPnP vendor (if any) go here
     </actionList>upnp forum
     <serviceStateTable>
      <stateVariable sendEvents="yes">
        <name>variableName</name>
        <dataType>variable data type</dataType>
        <defaultValue>default value</defaultValue>
        <allowedValueList>
         <allowedValue>enumerated value<lallowedvalue>
         Other allowed values defined by UPnP Forum working committee
         (if any) go here
        </allowedValueList
      </stateVariable>
      <stateVariable sendEvents="yes">
        <name>variableName</name>
        <dataType>variable data type</dataType>
        <defaultValue>default value</defaultValue>
        <allowedValueRange>
         <minimum>minimum value</minimum>
         <maximum>maximum value</maximum>
         <step>increment value<lstep>
        </allowedValueRange>
      </stateVariable>
      Declarations for other state variables defined by UPnP Forum working
      committee (if any) go here
      Declarations for other state variables added by UPnP vendor
       (if any) go here
     </serviceStateTable>
    </scpd>
```

La syntaxe est basée sur une succession de paragraphes délimités par une balise de début de paragraphe <*paragraphe*> et par une balise de fin de paragraphe </*paragraphe*>.
Nous appliquerons à titre d'exemple cette syntaxe dans le cadre d'un objet décrit en lien avec les figures 3a et 3b.

En liaison avec la figure 3b, nous pouvons présenter un mode de réalisation du plan mémoire de la carte à puce 3a selon l'invention. La carte 3a comprend une unité de traitement (non représentée) apte à mettre en oeuvre un programme d'application généralement enregistré dans une mémoire de programme (non représentée) non volatile dont l'accès en écriture est sécurisé, une mémoire MO non volatile de type EEPROM *(Electrical-Erase Programmable Read-Only Memory)* ou flash. La mémoire MO comporte des données d'information Oi relatives à l'objet. A titre d'exemple, lesdites données comportent la référence du constructeur de l'objet, le type de modèle, le numéro de série de l'objet, la version, ... La mémoire MO comporte en outre une mémoire MD dédiée aux dispositifs accessibles au travers de la carte à puce 3a. Dans l'exemple associé à la figure 3a, deux dispositifs D1 et D2 sont accessibles. La mémoire MD comporte une mémoire MD1 et une mémoire MD2 dédiée respectivement aux dispositifs D1 et D2. La mémoire MD1 comporte des données d'information D1i telles le nom du dispositif, du constructeur, un lien par exemple sous la forme d'une adresse internet vers des informations annexes, un numéro de série... Les données constructeur du dispositif D1 peuvent être différentes des données d'information Oi de l'objet 3a. En effet, le dispositif peut être émis par un opérateur différent de l'intégrateur de la carte à puce. La mémoire MD1 comprend une mémoire MSD1 dédiée aux services accessibles au moyen du dispositif D1. Dans l'exemple décrit en liaison avec la figure 3a, deux services S1D1 et S2D1 sont accessibles. La mémoire MSD1 comprend ainsi une mémoire MS1D1 et une mémoire MS2D1 dédiée respectivement au service S1D1 et au service S2D1. La mémoire MS1D1 comprend des données d'information propres au service S1D1. Ces données permettent de caractériser par exemple le nom du service, la version du service, ... La mémoire MS1D1 comporte en outre une référence vers le programme ou la mémoire mémorisant le programme associé aux fonctions offertes par le service S1D1. Ainsi la mémoire MO comporte en outre une mémoire MF dédiée aux fonctions mises à disposition par les services des dispositifs de l'objet. Ainsi dans l'exemple en liaison avec la figure 3b, la mémoire MF comporte quatre mémoires MF1, MF2, MF3 et MF4 associées respectivement aux fonctions F1, F2, F3 et F4. La mémoire MF1 associée à la fonction F1 comporte par exemple des données d'information F1i et le code exécutable ou programme de la fonction F1. Il en est de même pour la mémoire MF2 associée à la fonction F2 comportant les données d'information F2i et le programme MF2c. Ainsi la mémoire MS1D1 associée au service S1D1 comporte la référence rS1D1 vers les mémoires MF1 et MF2 puisque le service S1D1 permet l'exécution des fonctions F1 et F2. D'autres modes de réalisation permettraient de mémoriser dans MS1D1 une référence vers une table d'indirection pointant elle-même vers les fonctions.

En liaison avec la figure 3b, la mémoire MSD1 comporte la mémoire MS2D1 associée au service S2D1. Nous retrouvons les données d'information propres au service S2D1 et une mémoire ou des références rS2D1 vers les programmes des fonctions accessibles via le service S2D1, c'est à dire les fonctions F1 et F3. La figure 3b décrit une mémoire MD2 dédiée au dispositif D2 comportant des données d'information D2i et une mémoire MSD2. La mémoire MSD2 présente une structure similaire à celle décrite pour la mémoire MSD1. Ainsi la mémoire MSD2 comporte une mémoire MS1D2 dédiée au service S1D2, elle-même comportant des données d'information S1D21 propres au service S1D2. Elle comporte en outre la référence rS1D2 vers la mémoire MF4 puisque le service S1D2 permet l'exécution de la seule fonction F4. La mémoire MF4 comporte des données d'information et le code MF4c du programme associé.

Pour élaborer un objet apte à délivrer un descripteur de services selon l'invention, il est par ailleurs prévu un procédé permettant d'installer un dispositif dans l'objet électronique.

Ce procédé comporte une première étape consistant à associer à un dispositif des données d'information (D1i, D2i).

Ainsi si nous prenons l'exemple du dispositif D2 relatif au jeu Reversi émis par le fabriquant Gemalto, les données D2i comportent principalement la suite d'instructions XML suivante :

```
   <deviceType>urn:gemalto-com:device:Reversi:1</deviceType>
   <friendlyName>Gemalto UPnP Reversi Server</friendlyName>
   <manufacturer>"Gemalto"</manufacturer>
   <manufacturerURL>"http://www.gemalto.com"</manufacturerURL>
   <modelDescription>"Reversi Device"</modelDescription>
   <modelName>"Gemalto UPnP Reversi Device"</modelName>
   <modelNumber>"1.0"</modelNumber>
   <=modelURL>"http://www.gemalto.com"</modelURL>
   <serialNumber>12345678</serialNumber>
```

Ainsi, le dispositif D2 porte le nom de « Gemalto UPnP Reversi Server », le fabriquant est « Gemalto » dont des informations sont accessibles au moyen de l'adresse internet « http://www.gemalto.com », le numéro de série est « 12345678 ».

Le procédé d'installation comprend en outre une étape d'associer à un service offert par le dispositif des données d'information (S1D1i, S2D1i, S1D2i).

Si nous poursuivons avec l'exemple du dispositif D2 relatif au jeu Reversi émis par le fabriquant Gemalto, les données S1D2i peuvent comporter principalement la suite d'instructions XML suivante :

```
     <service>
      <serviceType>urn:gemalto-com:service:Play:1</serviceType>
      <serviceId>urn:gemalto-com:service:Play:1</serviceld>
      <SCPDURL>/upnp/Reversi.xml</SCPDURL>
      <controlURL>/game/Reversi</controlURL>
      <eventSubURL>/game/Reversi</eventSubURL>
     </service>
```

Le procédé d'installation comporte en outre une étape d'allocation d'une mémoire MD2 dédiée au dispositif D2 suivie d'une étape d'enregistrement dans celle-ci lesdites données d'information D2i associées au dispositif préalablement enregistrées.
Il comporte en outre une étape d'allouer au sein de la mémoire associée au dispositif, une mémoire MD2S1 dédiée au service D2S1 suivie d'une étape d'enregistrer dans ladite mémoire les données d'information D2S1i préalablement établies.

Le procédé d'installation prévoit en outre une étape d'allouer dans la mémoire MO de l'objet une mémoire MF4c pour contenir un programme associé à la fonction F4 offerte par le service suivie d'une étape d'enregistrer dans la mémoire dédiée au service une référence rS1D2 vers le programme associé à la fonction dudit service. Le procédé peut en outre prévoir d'enregistrer dans la mémoire de l'objet des données d'information associées à la fonction F4.

En liaison avec la figure 2, un procédé selon l'invention permet de délivrer un descripteur de service d'un objet électronique pouvant présenter une pluralité de dispositifs, chacun pouvant offrir une pluralité de services. Ce procédé peut faire partie intégrante du programme d'application exécuté par l'unité de traitement de l'objet. Ainsi le procédé débute à l'étape 100. A titre optionnel il est prévu de délivrer un préambule associé à l'objet. L'étape 101 consiste à rechercher dans la mémoire MO de l'objet des données d'information Oi, produire un préambule d'objet et délivrer ledit préambule. Cette étape peut ne pas être réalisée comme l'indique la flèche en pointillés reliant l'étape 100 à l'étape 102.
Ladite étape 102 consiste à rechercher s'il existe des données associées à un premier dispositif D1 dans la mémoire de l'objet. Si à l'étape 103 une mémoire associée à un dispositif a été trouvée, l'étape 104 consiste à analyser les données d'information enregistrées dans la dite mémoire et à produire et délivrer un préambule de dispositif. L'étape suivante 105 consiste à recherche dans la mémoire associée au dispositif s'il existe des données relative à un premier service D1S1. Si à l'étape 106 une mémoire associée à au premier service a été trouvée, l'étape 107 consiste à analyser les données d'information enregistrées dans ladite mémoire et à produire et délivrer un préambule de service. Un postambule associé audit service est produit et délivré à l'étape 108. Le procédé selon l'invention répète les étapes 105, 106, 107 et 108 si le dispositif comporte une pluralité de services. Ainsi en liaison avec l'objet décrit à l'aide des figures 3a et 3b, après avoir produit et délivré le préambule du dispositif D1 en 104, le préambule du service S1D1 en 107, le postambule du service S1D1 en 108, le préambule du service S2D1 est produit et délivré en 107, suivi par le postambule dudit service S2D1 en 108.
L'étape 106 constate qu'il n'existe pas d'autre service associé au dispositif D1. A l'étape 109 le postambule du dispositif D1 est produit et délivré.
A nouveau à l'étape 102, le procédé selon l'invention recherche dans la mémoire de l'objet une mémoire associée à un deuxième dispositif D2. Toujours en liaison avec l'objet selon les figures 3a et 3b, une mémoire MSD2 associée au dispositif D2 est trouvée selon le test 103. L'étape 104 consiste à analyser les données d'information enregistrées dans ladite mémoire et à produire et délivrer un préambule du dispositif D2. L'étape suivante 105 consiste à rechercher dans la mémoire associée au dispositif D2 s'il existe des données relatives à un premier service S1D2. Si à l'étape 106 une mémoire associée au premier service a été trouvée, l'étape 107 consiste à analyser les données d'information enregistrées dans ladite mémoire et à produire et délivrer un préambule de service. Un postambule associé audit service est produit et délivré à l'étape 108. Le procédé selon l'invention répète si nécessaire les étapes 105, 106, 107 et 108 si le dispositif comporte une pluralité de services. Ainsi en liaison avec l'objet décrit à l'aide des figures 3a et 3b, il n'existe pas de second service. Ainsi, après avoir produit et délivré le préambule du dispositif D2 en 104, le préambule du service S1D2 en 107, le postambule du service S1D2 en 108, l'étape 106 constate qu'il n'existe pas d'autre service associé au dispositif D2. A l'étape 109 le postambule du dispositif D2 est produit et délivré.
Une nouvelle fois, l'étape 102 consiste à rechercher s'il existe des données associées à un troisième dispositif dans la mémoire de l'objet. L'étape 103 constate qu'il n'existe pas de mémoire associée à un troisième dispositif. L'étape 110 consiste à produire et délivrer un postambule d'objet. Cette étape est optionnelle et peut ne pas être réalisée comme l'indique la flèche en pointillés reliant l'étape 103 à l'étape 111 matérialisant la fin du procédé.

Selon l'exemple en lien avec les figures 3a et 3b, il peut être prévu que la mise à disposition du dispositif D2 soit conditionnée par une activation.
Ainsi selon l'invention et en l'espèce, il est prévu de mémoriser dans la mémoire MD2, une information précisant que le dispositif est accessible ou non. A titre d'exemple, les données D2i peuvent contenir cette information. Le procédé pour délivrer le descripteur de l'objet 3a, complète l'étape 102 par un test d'accessibilité.
Dans le cas où le dispositif n'est pas activé, bien qu'il existe une mémoire MD2 associée à ce second dispositif D2, l'étape 102 consiste à ignorer ledit dispositif car les données D2i associées au dispositif stipulent que celui-ci n'est pas activé. L'étape 102 recherche une autre mémoire associée à un troisième dispositif. En l'espèce, à l'issue des éléments associés au premier dispositif D1, le postambule de l'objet est optionnellement produit et délivré.
Inversement, si les données du second dispositif précisent que celui-ci est activé, alors le test 103 est positif et les étapes 104, 105, 106, 107 et 108 permettent de produire et délivrer les éléments associés au dispositif D2 du descripteur de services de l'objet 3a.

De la même manière que pour un dispositif, un service peut être soumis à une condition d'activation. Ainsi, on peut mémoriser, dans la mémoire MS2D1, une information précisant que le service S2D1 du dispositif D1 est accessible ou non. A titre d'exemple, les données S2D1i peuvent contenir cette information. Le procédé pour délivrer le descripteur de l'objet 3a, complète l'étape 105 par un test d'accessibilité.
Dans le cas du service S2D1, bien qu'il existe une mémoire MS2D1 associée à ce second service, l'étape 105 consiste à ignorer ledit service car les données S2D1i associées au service stipulent que celui-ci n'est pas activé. L'étape 105 recherche une autre mémoire associée à un troisième service. En l'espèce, à l'issue des éléments associés au premier service du dispositif D1, le postambule du dispositif D1 est produit et délivré.

Prenons à présent comme hypothèse que seul est activé le dispositif D2 de l'objet 3a défini en liaison avec la figure 3a. Lors de la connexion de l'objet au réseau, l'unité de traitement de l'objet par la mise en oeuvre du procédé illustré à l'aide de la figure 2 produit et délivre le descripteur de services de l'objet comme suit :

Dans une première étape 101, la mise en oeuvre du procédé selon l'invention consiste à rechercher dans la mémoire MO de l'objet 3a, des données d'information Oi associées à l'objet. Les données Oi sont analysées pour produire et délivrer les données informatives relatives à l'objet :

```
    <?xml version="1.0" encoding="utf-8"?>
    <root xmlns="urn:schemas-upnp-org:device-1-0">
      <specVersion>
       <major>1</major>
       <minor>0</minor>
     </specVersion>
```

En 102, selon le procédé, on recherche dans la mémoire MO de l'objet 3a, une mémoire MD1 associée à un premier dispositif D1. La lecture de données d'information D1i contenues dans la mémoire MD1, révèle que le dispositif D1 n'est pas activé. Le procédé selon l'invention consiste à rechercher alors toujours en 102, une seconde mémoire MD2 associée à un second dispositif D2. La lecture de données d'information D2i contenues dans la mémoire MD2 montre que le dispositif D2 est activé. A l'étape 104, les données D2i sont analysées pour produire et délivrer les données informatives relatives au dispositif D2 sur la base des données d'information D2i .

```
 <device>
     <deviceType>urn:gemalto-com:device:Reversi:1</deviceType>
     <friendlyName>Gemalto Reversi Game</friendlyName>
     <manufacturerURL>"http://www.gemalto.com"</manufacturerURL>
     <modelDescription>"Reversi Device"</modelDescription>
     <modelName>"Gemalto UPnP Reversi Device"</modelName>
     <modelNumber>"1.0"</modelNumber>
     <modelURL>"http://www.gemalto.com"</modelURL>
     <serialNumber>12345678</serialNumber>
     <UDN>uuid:bdlcbdlc-bdlc-c5c9-fc7d-853ac5c9c5c8</UDN>
     <UPC>"00000001"</UPC>
     <serviceList>
```

Le procédé consiste à présent à rechercher en 105 dans la mémoire MD2 du dispositif D2, une mémoire MS1D2 associée à un premier service S1D2. La lecture de données d'information S1D2i montre que le service S1D2 est activé. A l'étape 107, les données S1D2i sont analysées pour produire et délivrer les données informatives relatives au service S1D2 sur la base des données information S1D2i _{:}

```
 <service>
   <serviceType>urn:gemalto-com:service:Play:1</serviceType>
   <serviceld>urn:gemalto-com:service:Play:1</serviceId>
   <SCPDURL>/upnp/Reversi.xml</SCPDURL>
   <controlURL>/game/Reversi</controlURL>
   <eventSubURL>/game/Reversi</eventSubURL>
```

Puis selon le procédé, le postambule du service S1D2 suivant est produit et délivré en 108:

```
   </service>
```

A nouveau en 105, la mise en oeuvre du procédé consiste à rechercher dans la mémoire MSD2 du dispositif D2 s'il existe une mémoire associée à un second service. En 106, l'unité de traitement constate qu'il n'existe pas d'autre service associé au dispositif D2. En 109, selon le procédé, le postambule du dispositif D2 est produit et délivré :

```
    </serviceList>
    </device>
```

A nouveau en 102, le procédé consiste à rechercher dans la mémoire M0 de l'objet s'il existe une mémoire associée à un troisième dispositif. En 103, selon le procédé, l'unité de traitement constate qu'il n'existe pas d'autre dispositif. En 110, selon le procédé, le postambule de l'objet est produit et délivré:

```
 <presentationURL>http://192.168.254.1/index.html</presentationURL>
 </root>
```

Ainsi selon l'invention la carte à puce 3a a produit le descripteur de services suivant :

```
 <?xml version="1.0" encoding="utf-8"?>
 <root xmlns="urn:schemas-upnp-org:device-1-0">
 <specVersion>
   <major>1</major>
   <minor>0</minor>
 </specVersion>
 <device>
   <deviceType>urn:gemalto-com:device:Reversi:1</deviceType>
   <friendlyName>Gemalto UPnP Reversi Server</friendlyName>
   <manufacturer>"Gemalto"</manufacturer>
   <manufacturerURL>"http://www.gemalto.com"</manufacturerURL>
   <modelDescription>"Reversi Device"</modelDescription>
   <modelName>"Gemalto UPnP Reversi Device"</modelName>
   <modelNumber>"1.0"</modelNumber>
   <modelURL>"http://www.gemalto.com"</modelURL>
   <serialNumber>12345678</serialNumber>
   <UDN>uuid:bd1cbd1c-bd1c-c5c9-fc7d-853ac5c9c5c8</UDN>
   <UPC>"00000001"</UPC>
   <serviceList>
     <service>
      <serviceType>urn:gemalto-com:service:Play:1</serviceType>
      <serviceld>urn:gemalto-com:service:Play:1</serviceId>
      <SCPDURL>/upnp/Reversi.xml</SCPDURL>
      <controlURL>/game/Reversi</controlURL>
      <eventSubURL>/game/Reversi</eventSubURL>
     </service>
   </serviceList>
  </device>
 <presentationURL>http://192.168.254.1/index.html</presentationURL>
 </root>
```

Selon un mode réalisation préféré, un objet selon l'invention produit et délivre au monde extérieur au fil de l'eau les éléments du descripteur de service au gré de la mise en oeuvre du procédé illustré par la figure 2. Il peut être envisagé que l'objet produise et délivre lesdits éléments dans une mémoire tampon (volatile ou non). La délivrance en tant que telle du descripteur au monde extérieur consiste à émettre, à la demande, ledit descripteur préalablement produit et mémorisé dans ladite mémoire tampon.

L'invention n'est pas limitée à l'architecture UPnP^{™} ni aux réseaux locaux. Elle s'applique à tout objet communiquant relié à un réseau et devant délivrer un descripteur pour mettre à disposition d'autres objets communicants du réseau des services groupés, le cas échéant, par un ou plusieurs dispositifs.

## Revendications

1. Procédé pour délivrer un descripteur de services accessibles via un objet électronique (1, 2, 3, 3a, 4, 5) communicant au sein d'un réseau (10), ledit objet présentant au moins un dispositif (D1, D2) offrant au moins un service (S1D1, S2D1, S1D2), ledit descripteur permettant l'accès au réseau (10) et la présentation de l'objet au moyen d'un protocole de découverte automatique et comportant :
- pour un dispositif, un préambule de dispositif comprenant des données informatives de dispositif, un postambule de dispositif ;
- pour un service, un préambule de service comprenant des données informatives de service, un postambule de service ;
**caractérisé en ce que** le procédé comporte :
- une étape de rechercher (102, 103) dans une mémoire (MD) de l'objet une mémoire (MD1) associée à un dispositif (D1) ;
- une étape de délivrer (104) un préambule du dispositif (D1) comprenant des données informatives à partir d'une lecture de données (D1i) enregistrées dans la mémoire (MD1) associée au dispositif ;
- une étape de rechercher (105, 106) dans une mémoire associée au dispositif (MSD1) une mémoire (MS1D1) associée à un service (S1D1) offert par ledit dispositif (D1) ;
- une étape de délivrer (107) un préambule du service comprenant des données informatives relatives au service à partir d'une lecture de données (S1D1i enregistrées dans la mémoire (MS1D1) associée au service;
- une étape de délivrer (108) un postambule du service ;
- une étape de délivrer (109) un postambule du dispositif.

2. Procédé selon la revendication 1 **caractérisé en ce qu'**il comporte autant de séquences d'étapes consistant à _{:}
- rechercher (105, 106) dans la mémoire associée au dispositif (MSD1) une mémoire (MS1D1) associée à un service (S1D1) offert par ledit dispositif (D1) ;
- délivrer (107) un préambule du service comprenant des données informatives relatives au service à partir d'une lecture de données (S1D1i) enregistrées dans la mémoire (MS1D1) associée au service;
- et délivrer (108) un postambule du service ; qu'il existe de services accessibles au moyen du dispositif et **en ce que** lesdites séquences d'étapes sont réalisées avant l'étape de délivrer (109) le postambule dudit dispositif.

3. Procédé selon la revendication 1 ou 2 **caractérisé en ce qu'**il comporte autant d'itérations qu'il existe de dispositifs accessibles via l'objet.

4. Procédé selon l'une quelconque des revendications 1 à 3 **caractérisé en ce qu'**il comporte en outre :
- une première étape de délivrer (101) un préambule de l'objet (1, 2, 3, 3a, 4, 5) comprenant des données informatives relatives à l'objet à partir d'une lecture de données (Oi) enregistrées dans la mémoire (MO) de l'objet ;
- une dernière étape de délivrer (110) un postambule de l'objet.

5. Procédé selon l'une quelconque des revendications 1 à 4 **caractérisé en ce qu'**il est mis en oeuvre par l'objet lors de la connexion de celui-ci au réseau.

6. Procédé selon la revendication 5 **caractérisé en ce qu'**il délivre un descripteur comprenant les données de l'ensemble des dispositifs accessible par l'objet.

7. Procédé selon l'une quelconque des revendications 1 à 6 **caractérisé en ce que** l'étape de rechercher un service accessible associé à un dispositif comporte un test d'accessibilité conditionnant la délivrance des informations concernant ledit service.

8. Procédé selon la revendication 7 **caractérisé en ce que** ledit test d'accessibilité est basé sur une des données (S1D1i) enregistrées dans la mémoire (MS1D1) associée au service.

9. Procédé selon l'une quelconque des revendications 1 à 8 **caractérisé en ce que** l'étape de rechercher un dispositif accessible associé à un dispositif comporte un test d'accessibilité conditionnant la délivrance des informations concernant ledit dispositif.

10. Procédé selon la revendication 9 **caractérisé en ce que** ledit test d'accessibilité est basé sur une des données (D1i) enregistrées dans la mémoire (MD1) associée au dispositif.

11. Objet électronique communicant (la, 1b) au sein d'un réseau (10), ledit objet présentant un dispositif (D1, D2) offrant un service (S1D1, S2D1, S1D2) sous la forme d'au moins une fonction (F1, F2, F3, F4), l'accès au réseau par l'objet se faisant au moyen d'un protocole de découverte automatique exploitant un descripteur délivré par l'objet, **caractérisé en ce que** l'objet comporte pour mettre en oeuvre le procédé selon l'une quelconque des revendications 1 à 10 _{:}
- une mémoire (MO) pour mémoriser des données d'information propres au dispositif (D1i, D2i), des données d'information propres au service (S1D1i, S2D1i, S1D2i) du dispositif, et une référence (rS1D1, rS2D1) vers un programme (MF1c, MF2c, MF3c, MF4c) mis en oeuvre par l'objet pour réaliser ladite au moins une fonction associée audit service du dispositif ;
- des moyens pour successivement :
- rechercher dans une mémoire (MD) de l'objet une mémoire (MD1) associée à un dispositif (D1);
- délivrer un préambule du dispositif (D1, D2) comprenant les données informatives relatives au dispositif recherché à partir d'une lecture des données d'information (D1i, D2i) enregistrées dans la mémoire (MD1, MD2) de l'objet;
- rechercher les données relatives à un service du dispositif dans la mémoire de l'objet ;
- des moyens pour délivrer (107) un préambule du service comprenant des données informatives relatives au service à partir d'une lecture des données d'information (S1D1i, S2D1i) enregistrées dans la mémoire (MS1D1, MS2D1) de l'objet;
- des moyens pour délivrer (108) un postambule du service ;
- des moyens pour délivrer (109) un postambule du dispositif.

12. Objet électronique selon la revendication 11
**caractérisé en ce qu'**il comporte en outre :
- des données (Oi) enregistrées dans la mémoire (MO) de l'objet ;
- des moyens pour délivrer un préambule de l'objet comprenant des données informatives relatives à l'objet à partir d'une lecture desdites données (Oi) enregistrées dans la mémoire (MO) de l'objet ;
- des moyens pour délivrer (110) un postambule de l'objet.

13. Procédé pour installer un dispositif dans un objet électronique (1, 2, 3, 3a, 4, 5) selon la revendication 11 ou 12 **caractérisé en qu'**il comporte :
- une étape d'associer au dispositif des données d'information (D1i, D2i) ;
- une étape d'associer à un service offert par le dispositif des données d'information (S1D1i, S2D1i, S1D2i) ;
- une étape d'allouer d'une mémoire (MD1, MD2) dédiée au dispositif ;
- une étape d'enregistrer dans celle-ci lesdites données d'information associées au dispositif (D1i, D2i) ;
- une étape d'allouer au sein de la mémoire associée au dispositif, une mémoire (MSD1, MSD2) dédiée au service ;
- une étape d'enregistrer dans la mémoire dédiée au service (MS1D1, MS2D1) les données d'information (S1D1i, S2D1i) ;
- une étape d'allouer dans la mémoire (MO) de l'objet une mémoire (MF1c, MF2c) pour contenir un programme associé à une fonction (F1, F2, F3, F4) offerte par le service ;
- une étape d'enregistrer dans la mémoire dédiée au service une référence (rS1D1, rS2D1) vers le programme associé à une fonction dudit service.
